Europäisches Patentamt

European Patent Office

Office européen des brevets

(19)

(11) Publication number: **0 450 474 A1**

## (12) EUROPEAN PATENT APPLICATION

(21) Application number: **91104825.4**

(22) Date of filing: **26.03.91**

(51) Int. Cl.5: **G01N 27/28**

(30) Priority: **02.04.90 JP 87656/90**

(43) Date of publication of application:
**09.10.91 Bulletin 91/41**

(84) Designated Contracting States:
**DE GB IT**

(71) Applicant: **HORIBA, LTD.**
**2 Miyanohigashi-machi Kissyoin**
**Minami-ku Kyoto(JP)**

(72) Inventor: **Tomita, Katsuhiko**
**8-17, Kinugawa 2-chome**
**Otsu-city, Shiga(JP)**
Inventor: **Nakane, Masami**
**474-3, Ishizukuri, Oharano**
**Nishikyo-ku, Kyoto(JP)**
Inventor: **Ogihara, Yoko**
**Sebun Haitsu 302, Minamikoji 7-1**
**Kamiueno-cho, Muko-city, Kyoto(JP)**

(74) Representative: **TER MEER - MÜLLER -**
**STEINMEISTER & PARTNER**
**Mauerkircherstrasse 45**
**W-8000 München 80(DE)**

(54) **Sheet-type electrode for ion measurement.**

(57) The sheet-type electrode for ion measurement comprises a thin-film ion selective responsive membrane (20) formed on an upper surface of an insulating support layer (10) by sequentially dropping of an ion selective responsive membrane paste containing a solvent, to which said insulating support layer is soluble, polyvinyl chloride resin powders and an ion response substance. For avoiding a swelling of the membrane, in particular during the measurement of liquids, and for improving the abrasion resistance according to the invention, highly polymerized polyvinyl chloride resin powders are used having a polymerization degree of 3,800 to 20,000.

Fig. 1

EP 0 450 474 A1

The present invention relates to a sheet-type electrode used for measuring an ionic concentration such as pH.

A conventional sheet-type electrode for the measurement of ions, as disclosed for example in Japanese Patent Application Laid-Open No. Sho 63-225164, comprises a thin-film ion selective responsive membrane formed on an upper surface of an insulating support layer by sequentially dropping an ion selective responsive membrane paste containing a solvent, to which said insulating support layer is soluble, polyvinyl chloride resin powders and an ion responsive substance on said upper surface of the insulating support layer.

Such ion selective responsive membranes provide the advantage of perfectly sealing against the support layer and they can be formed within short time. Sheet electrodes of this type can be mass-produced with stabilized quality but problems have occurred in the following points.

In many cases, a sample to be measured is a liquid, so that the responsive membrane soaks and becomes swollen and, according to circumstances, deteriorated after repeated measurements. In addition, the surface of the ion selective responsive membrane of the sheet-type electrode is wiped with a gauze or the like before or after measurement of ions so that said surface of the ion selective responsive membrane may be deformed or worn when rubbed hard.

It has been tried to reinforce the ion selective responsive membrane for example by adding a reinforcing material, such as nylon mesh and other inorganic materials. But such reinforcing material tends for example to project from the surface of the responsive membrane during use and may according to circumstances result in an insulating fracture.

It is an object of the present invention to provide a high-capacity sheet-type electrode for ion a measurement, which does not become swollen even after repeated uses, and of which the ion selective responsive membrane is not deformed or worn when rubbed with a gauze or the like.

In order to achieve the above described object, in a sheet-type electrode for the measurement of ions in which a thin-film ion selective responsive membrane is formed on an upper surface of an insulating support layer by sequentially dropping an ion selective responsive membrane paste containing a solvent, to which said insulating support layer is soluble, polyvinyl chloride resin powders and an ion responsive substance on said upper surface of the insulating support layer, according to the present invention, said polyvinyl chloride resin powders have a polymerization degree of 3,800 to 20,000.

According to the present invention, highly polymerized polyvinyl chloride resin powders are used in a high-density ion selective responsive membrane and thus a deterioration resulting from swelling of the membrane can be prevented and also the abrasion resistance is improved.

One preferred embodiment of the present invention is shown in Figs. 1 to 3, in which

Fig. 1     is a disintegrated perspective view showing a sheet-type composite electrode according to the present invention for $NO_3{}^-$ measurement;

Fig. 2     is a perspective view of the external appearance of the sheet-type composite electrode of Fig. 1 for $NO_3{}^-$ measurement;

Fig. 3     is a sectional view of the sheet-type composite electrode shown in Fig. 1; and

Fig. 4     is a partially broken perspective view of another preferred embodiment of the present invention.

Preferred embodiments of the present invention will be described below with reference to the drawings.

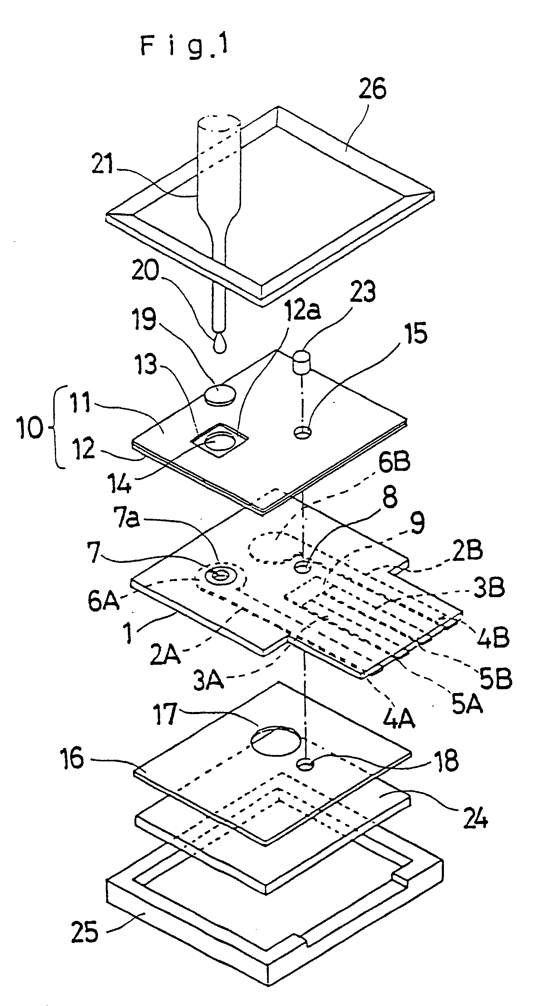

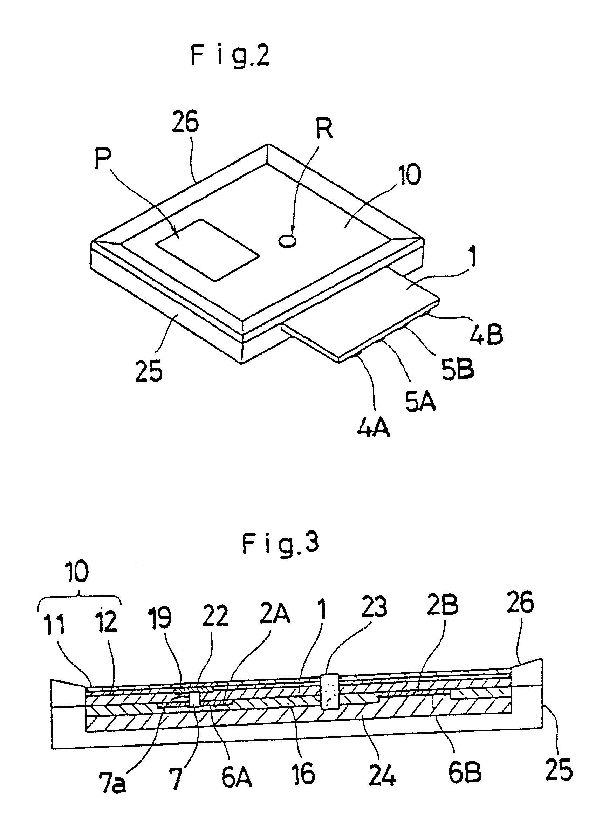

Referring to Figs. 1 to 3, reference numeral 1 designates a substrate made of a material having a sufficiently high insulation even though it is immersed in a solution containing an electrolyte, such as polyethylene terephthalate (hereinafter referred to as PET). In addition, said substrate 1 may be formed of an organic high molecular material, such as polyvinyl chloride resin (hereinafter referred to as PVC), polyethylene, polypropylene, acryl and polyfluoroethylene, and an inorganic material, such as silica glass and pyrex glass, in addition to PET.

The substrate 1 is provided with a metal selected from the group consisting of Ag, Cu, Au and Pt and alloys thereof or a paste containing these metals or a semi-conductor, such as $IrO_2$ and $SnO_2$, adhered to a lower surface thereof by a physical plating method, such as vacuum vapor deposition and CVD, a chemical plating method, such as electrolytic method and electroless method, or by a printing method, such as silk screening, relief printing flat plate method, to form two pairs of electrodes, that is a pair of outside electrodes 2A, 2B and a pair of inside electrodes 3A, 3B. In this preferred embodiment, the lower surface of the substrate 1 is subjected to a grafting process and an anchoring treatment by use of a silane coupling agent or the like followed by applying an Ag paste by a silk screening method.

The basic end portions positioned at one end edge of the substrate 1 of said electrodes 2A, 2B, 3A, 3B are used as lead portions 4A, 4B, 5A, 5B as they are. In addition, nearly circular pointed end portions positioned at a central portion in said pair of outside electrodes 2A, 2B are covered with an electrode material, such as AgCl, to form internal electrode portions 6A, 6B. One internal electrode portion 6A is provided with a through hole 7 having an electrically conductive portion 7a on an inner surface formed at an almost center thereof and the other internal electrode portion 6B is provided with a through hole 8 formed in the vicinity thereof. A temperature-compensating electrode portion 9, such as a thermister, extends over said circular end portions positioned at nearly a central portion of the substrate 1 across said pair of inside electrodes 3A, 3B.

Reference numeral 10 designates an insulating support layer formed by adhering two sheet materials 11, 12 having a sufficiently high insulation to each other. Said insulating support layer 10 comprises for example an upper sheet material 11 made of PET and a lower sheet material 12 made of PVC. The insulating support layer 10 is formed for example by subjecting splicing surface sides of both sheet materials 11, 12 to a surface treatment by printing with an ultraviolet setting ink and semidrying followed by pressing both sheet materials 11, 12 to each other. Reference numeral 12a designates a surface treated layer.

The upper sheet material 11 is provided with for example a square through hole 13. In addition, the lower sheet material 12 is provided with a circular through hole 12 slightly smaller than said through hole 13 formed at a position corresponding to the through hole 13. These through holes 13, 14 are formed at positions corresponding to said through hole 7 in the substrate 1. In addition, a through hole 15 passing through both sheet materials 11 and 12 is aligned to and corresponds to said through hole 8 in the substrate 1. Furthermore, also the side of the upper surface of the upper sheet material 11 is subjected to said grafting process and said anchoring treatment by use of a silane coupling agent and the like.

Reference numeral 16 designates a lower support layer made of a material, for example PET, having a sufficiently high insulation in the same manner as the substrate 1 and the support layer 10. This lower support layer 16 is arranged below the substrate 1 and is provided with a through hole 17 and a through hole 18 formed at positions corresponding to the internal electrode portion 6B and the through hole 8 in the substrate 1, respectively. Said lower support layer 16 is formed in the same manner as the support layer 10.

Reference numeral 19 designates a gelatinized internal liquid made of for example (O.03M - KNO$_3$ - 0.1,M - KCl)-glycerine-agar-agar and formed in a disk-like shape filled in said through hole 14 in the lower sheet material 12. Said gelatinized internal liquid 19 is turned into a paste by heating. By screen printing the liquid 19 is filled into the hole 14 such that its upper surface is slightly below the upper surface of the upper sheet material 11 and connects to the internal electrode portion 6A through said electrically conductive portion 7a within the through hole 7 formed in the substrate 1.

Reference numeral 20 designates an ion selective responsive membrane paste to be dropped on said gelatinized internal liquid 19 from above. Said ion selective responsive membrane paste 20 is obtained by dissolving 0.5 g of PVC powders having a polymerization degree of 3,800 to 20,000, 0.333 g of any one of tetraoctylammonium nitrate, trioctylmethylammonium nitrate and tetradodecylammonium nitrate, which are nitrate type quarternary ammonium salts (RNNO$_3$, R: C$_8$ to C$_{17}$), as a NO$_3^-$ responsive substance and 0.166 g of di-n-octyl phthalate as a plasticiser in 10 ml of tetrahydrofuran (THF) as a solvent.

The ion selective responsive membrane paste 20, which has been obtained in the above described manner, is filled in by use of a syringe 21 and discharged drop by drop into the gelatinized internal liquid 19 by an appointed quantity from above, as shown in Fig. 1, followed by evaporating to dryness. By repeating the above described operation several times, a NO$_3^-$-responsive membrane 22 with a thickness of for example about scores of microns is formed.

The viscosity of the ion selective responsive membrane paste 20 is increased with an increase of said polymerization degree of said PVC powders, so that it becomes necessary to regulate the number of drops and its quantity when increasing the quantity of said THF added so that an appointed film-thickness may be obtained.

Reference numeral 23 designates a gel-impregnated hydrophilic high molecular porous member as a liquid junction of a reference electrode R provided so as to be inserted through the through holes 15, 8, 18 formed at corresponding positions of the support layer 10, the substrate 1 and the lower support layer 16. Said gel-impregnated hydrophilic high molecular porous member 23 is made of a sintered molded body of olefin family high polymer powders [for example Sun Fine AQ (trade name) made by Asahi Kasei KK] having a mechanical strength nearly the same as that of polyolefines and a hydrophilicity given by a denaturing treatment impregnated with a so-called undrying out gel composite, which deposits no KCl and does not lose its surface wetness of the porous member after leaving in air, for example a water-containing jelly mainly comprising a Na salt of an acrylic polymer [for example U jelly (trade name) made by Showa Denko KK], and provided so as to slightly project from the surface of the support layer 10.

Reference numeral 24 designates a gelatinized internal liquid having the same chemical composition as that of the gelatinized internal liquid 19 and adapted not only to be brought into contact with the internal electrode portion 6B through said through hole 17 formed in the lower support layer 16 but also in contact with the gel-impregnated hydrophilic high molecular porous member 23. Reference numeral 25 designates a bottom case and reference numeral 26 designates a holder of liquid to be tested provided in a circumference of the support layer 10.

For the above described $NO_3^-$-measurement sheet-type composite electrode, highly polymerized polyvinyl chloride resin powders are used in forming the ion selective responsive membrane 22 responsive to $NO_3^-$, so that a high-density ion selective responsive membrane 22 is achieved and thus a deterioration resulting from a swelling of the membrane can be prevented and the abrasion resistance is improved.

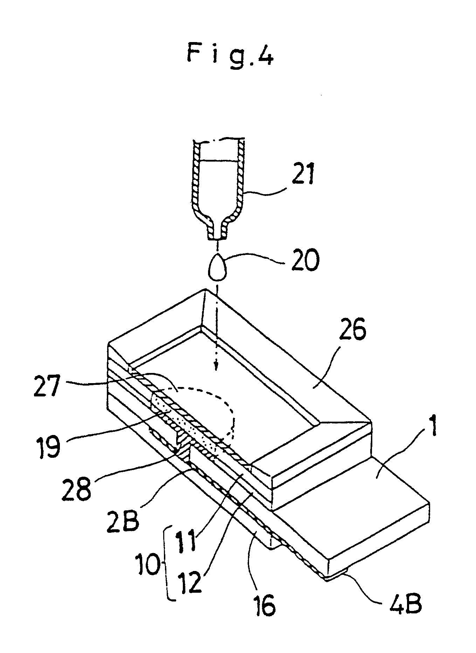

Fig. 4 shows one example of an ion responsive membrane electrode to which the present invention is applied. Reference numeral 27 designates an ion selective responsive membrane formed by solidifying the ion selective responsive membrane paste 20. Reference numeral 28 designates a through hole electrode formed in the substrate 1 for connecting a gelatinized internal liquid 19 with a lead electrode 2B.

Although the support layer 10 has a double-layer structure comprising the sheet material 11 made of PET and the sheet material 12 made of PVC in the above described preferred embodiment, the sheet materials 11, 12 may also be made of PVC.

The present invention is not limited by the above described preferred embodiments. That is to say, the present invention can be applied also to a PVC family liquid membrane-type ion selective electrode for measuring of $Na^+$, $K^+$, $Cl^-$, $Ca^{++}$, $H^+$ and the like, respectively. The compositional ratio (% by weight) in the respective ion electrodes is shown in the following table:

## Table

|  | $Na^+$ | $K^+$ | $Cl^-$ | $Ca^{++}$ | $H^+$ |
|---|---|---|---|---|---|
| PVC powders | 32 | 32 | 50 | 26.5 | 50 |
| Responsive substance | 3.2 | 3.2 | 33.3 | 6.7 | 33.3 |
| Plasticizer | 64 | 64 | 16.6 | 66.8 | 16.6 |
| Others | 0.8 | 0.8 | – | – | – |

As to the responsive substance in the above table, Bis-12-Crown-4 is used for $Na^+$, barinomycin for $K^+$, trioctylmethylammonium chloride for $Cl^-$, Ca-di-(p-octylphenyl)phosphate for $Ca^{++}$ and trioctylphosphine oxide for $H^+$.

As described above, according to the present invention, highly polymerized polyvinyl chloride resin powders are used, so that a high-density ion selective responsive membrane can be formed and thus a deterioration resulting from a swelling can be prevented and the abrasion resistance is improved. In addition, the responsive substance dissolved in the plasticizer can be effectively prevented from eluting, so that a high-capacity sheet-type electrode for use in measurement of ions can be obtained. Furthermore, since the production steps are rather easy, a sheet-type electrode according to the present invention can be mass-produced with a very high standard of permanent quality.

**Claims**

1. A sheet-type electrode for ion measurement, in which a thin-film ion selective responsive membrane (20) is formed on an upper surface of an insulating support layer (10) by sequentially dropping an ion selective responsive membrane paste containing a solvent, to which said insulating support layer is soluble, polyvinyl chloride resin powders and an ion responsive substance on said upper surface of the insulating support layer (10), characterized in that said polyvinyl chloride resin powders have a polymerization degree of 3,800 to 20,000.

# F i g.1

## Fig.2

## Fig.3

# F i g.4

European
Patent Office

**EUROPEAN SEARCH
REPORT**

Application Number

**EP 91 10 4825**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | EP-A-0 282 651 (HORIBA LTD.)<br>* abstract * * column 5, line 20 - column 6, line 5; figure 1 &<br>JP-A-63-225164 * | 1 | G 01 N 27/28 |
| Y | PATENT ABSTRACTS OF JAPAN vol. 12, no. 88 (P-678)(2935) 23 March 1988,<br>& JP-A-62 222157 (TOSHIBA CORP.) 30 September 1987,<br>* the whole document * | 1 | |
| A | PATENT ABSTRACTS OF JAPAN vol. 9, no. 44 (P-337)(1767) 23 February 1985,<br>& JP-A-59 182357 (SHIMAZU SEISAKUSHO K.K.) 17 October 1984,<br>* the whole document * | 1 | |
| A | US-A-4 629 744 (HIROAKI UEMATSU ET AL.)<br>* abstract * * column 2, lines 13 - 21 * | 1 | |
| A | EP-A-0 291 903 (ABBOTT LAB.)<br>* abstract * * column 5, line 16 - column 7, line 21; figure 1 * * column 8, line 55 - column 9, line 57; figure 3 * | 1 | |

TECHNICAL FIELDS
SEARCHED (Int. Cl.5)

G 01 N

The present search report has been drawn up for all claims

| Place of search | Date of completion of search | Examiner |
|---|---|---|
| Berlin | 11 June 91 | MOUTARD P.J. |